# EUROPEAN PATENT SPECIFICATION

(11) **EP 4 026 734 B1**
(45) Date of publication and mention of the grant of the patent: **18.10.2023**
(21) Application number: 21210117.4
(22) Date of filing: 24.11.2021
(51) Int. Cl.: B60R 9/06

(54) **INTEGRATED VEHICLE RACK**
INTEGRIERTE FAHRZEUGHALTERUNG
GRILLE INTÉGRÉE DE VÉHICULE

(30) Priority: 07.12.2020 GB 202019201
(43) Date of publication of application: 13.07.2022
(73) Proprietor: Auxtail Limited, Milton Keynes, Buckinghamshire MK10 7BG (GB)
(72) Inventor: Broadbent, Michael Craig, Milton Keynes, MK10 7BG (GB)
(74) Representative: Stevens Hewlett & Perkins

(56) References cited:
- EP-A1- 1 227 004
- DE-A1- 10 328 491
- DE-A1-102010 017 182
- JP-A- H08 175 275

## Description

This invention relates to a rack for integrating into a vehicle.

It is common for vehicles such as cars to carry bicycles and other loads on an externally mounted rack. Such a rack is often located on the roof of the vehicle or at the rear of the vehicle. Racks have a number of design and engineering issues to contend with, for example how easy it is to prepare the rack for loading, and how easy is it to disassemble the rack for storage. For electric cars, the effect on the vehicle's range has to be considered, especially for racks that are permanently fixed to the vehicle, since the rack increases the vehicle's weight and can also change the aerodynamics of the vehicle.

JP H08 175275 A discloses a rack for integrating into a vehicle. The rack comprises a pair of deployment arms for connecting to the vehicle at one end of each deployment arm and a pair of secondary arms, each secondary arm connected to a respective deployment arm at one end of each secondary arm. The rack further comprises a rail connected to each of the secondary arms at an opposite end of the secondary arm to the connection to the deployment arm and a sub-rail connected at the juncture of a deployment arm and a arm.

Roof racks increase the frontal area of a vehicle, which adversely affects aerodynamics and associated range. Roof racks can also be difficult to load, especially if the user is short and the vehicle tall, and/or if the load is heavy, for example an E-Bike. These issues tend to lead to rear mounted racks being preferred over roof mounted racks for electric cars. Racks that are fixed to a tailgate can damage paintwork. For tow-bar fixed racks, the weight and size of the racks can make storing, carrying and fixing difficult. Towball fixed racks are expensive, heavy and have limited load carrying capability. Some rear tow-bar racks are stored at the rear by folding up to the rear bumper. However, these can obscure the number plate and lights, and hinder access to the tailgate.

It is therefore an object of the invention to improve upon the known art.

According to a first aspect of the present invention, there is provided a rack for integrating into a vehicle, the rack comprising a pair of deployment arms for connecting to the vehicle at one end of each deployment arm, a pair of secondary arms, each secondary arm connected to a respective deployment arm at one end of each secondary arm, a rail connected to each of the secondary arms at an opposite end of the secondary arm to the connection to the deployment arm, a pair of sub-rails, each sub-rail connected at the juncture of a respective deployment arm and a respective secondary arm, characterised in that the rack further comprises a pair of outer control arms, each outer control arm connected to the rail at one end of each outer control arm and connected to a respective sub-rail at the opposite end of each outer control arm.

Owing to the invention, it is possible to provide a rack that can be permanently fixed to a vehicle, which removes the need for storage and attachment and the rack is able to be fixed permanently to a rear panel of a vehicle at both sides, and this reduces any possible user error of fixing a rack each time and also prevents single failures causing catastrophic incidents. The location of the rack at a rear of the vehicle rather than above the vehicle reduces issues of range degradation for electric vehicles. The pairs of deployment and secondary arms can be folded inwards which allows for storage behind a rear panel, in or under a rear fascia without protruding beyond the length of the vehicle and provides useful extension to the rear for load carrying.

The angle of the rotation axes of the deployment arms at the rear panel joint preferably causes the rail to move upwards as it moves rearwards, which provides a good departure angle, and clearance for ramps. The external rail provided by the system can be used for external loads, bike carrying or as a step. As a result, there is provided a rack for a vehicle that can be stored inside a rear bumper. The rack can be fixed to a rear panel of a vehicle at both sides, and therefore has two load paths. A fascia can be fixed to the rear of the rack which closely aligns to the bumper when stored, providing the impression of continuity with the rest of the vehicle. The control arms, which can be parallel to the respective deployment and secondary arms, assure the rack moves smoothly without jamming or the cover catching a vehicle bumper.

Advantageously, the rail of the rack mounts a bike rack, where preferably the bike rack comprises a set of components that can be folded to be substantially parallel to the rail. One use for the vehicle rack is to provide support for a bike rack, which can be embodied by a set of components that are able to be folded up and down from the rail which forms part of the vehicle rack. Since these components can be folded down, they can be stowed away inside the vehicle when the vehicle rack is stowed away. This provides an excellent way for providing a bike rack on a vehicle that is easy to use while being very safe and secure, as the user is not having to mount the bike rack themselves, when they want to use the bike rack.

Ideally, the bike rack comprises a pivot arm and a front wheel support both rotationally connected to the rail. In this arrangement, preferably the pivot arm is connected to the front wheel support via a stop which is directly connected to the pivot arm and slidably connected to the front wheel support. The use of a stop connected the pivot arm and front wheel support together has two main advantages. Firstly, the two components are deployed together in one action as movement of one of the two causes the other to move at the same time, through the stop joining them together. Secondly, the use of the stop ensures that the components cannot be moved into non-functioning and/or non-safe positions, since the position of the stop can be controlled meaning that the movements of the two components is restricted by the position of the stop.

Embodiments of the present invention will now be described, by way of example only, with reference to the accompanying drawings, in which:-
Figure 1 is a plan view of a rack in a deployed condition,
Figure 2 is a plan view of the rack of Figure 1 in a stowed condition,
Figure 3 is a side view of the rack of Figure 1,
Figure 4 is a rear view of the rack of Figure 1, with a bicycle rack in deployed condition,
Figure 5 is a rear view similar to Figure 4, with the bicycle rack in a stowed condition,
Figure 6 is a plan view of the bike rack in a stored condition,
Figure 7 is a plan view of a two bike rack in a partially deployed condition,
Figure 8 is a plan view of a two bike rack in a stored condition, and
Figure 9 is a front view of a bike rack in a stored condition.

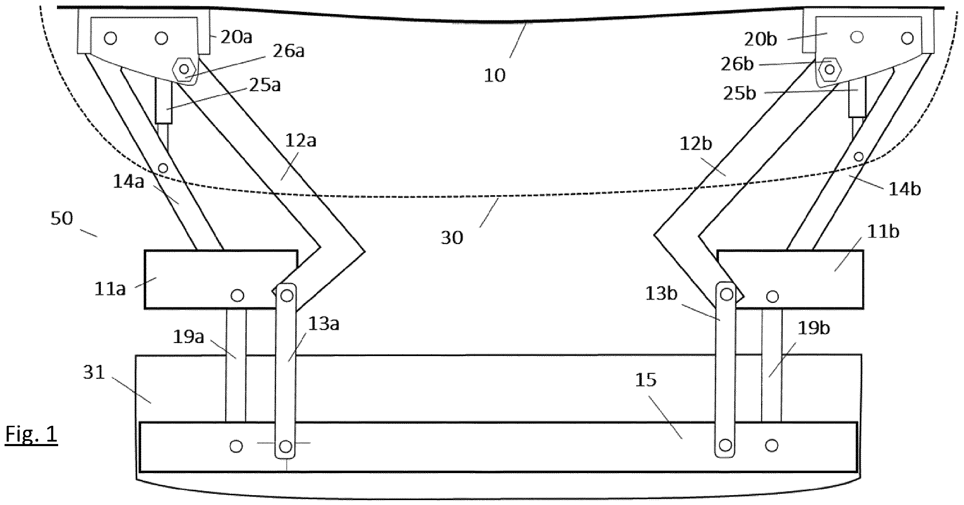

A rack 50 is shown in plan view in Figure 1. The rack 50 is for integrating into a vehicle 10 and the rack 50 comprises a pair of deployment arms 12 for connecting to the vehicle 10 at one end of each deployment arm 12, a pair of secondary arms 13, each secondary arm 13 connected to a respective deployment arm 12 at one end of each secondary arm 13, and a rail 15 connected to each of the secondary arms 13 at an opposite end of the secondary arm 13 to the connection to the deployment arm 12. The rack 50 also comprises a pair of sub-rails 11, each sub-rail 11 connected to a respective deployment arm 12 and to a respective secondary arm 13.

Also present in the rack 50 are a pair of inner control arms 14, each inner control arm 14 connected to the vehicle 10 at one end of each inner control arm 14 and connected to a respective sub-rail 11 at the opposite end of each inner control arm 14 and a pair of outer control arms 19 each outer control arm 19 connected to the rail 15 at one end of each outer control arm 19 and connected to a respective sub-rail 11 at the opposite end of each outer control arm 19. Each deployment arm 12 is L-shaped.

The deployment arms 12a and 12b are rotationally connected to the vehicle 10 at the rear panel by dropdown brackets 20a and 20b. The secondary arms 13a and 13b are rotationally attached to the opposing end of deployment arms 12a and 12b respectively, and the opposing ends of the secondary arms 13a and 13b are rotationally fixed to a rail 15. At the connection of the deployments arms to the secondary arms are the fixed sub-rails 11a and 11b. The inner control arms 14a and 14b, which are substantially the same length as the deployment arms 12a and 12b, are rotationally fixed to the vehicle 10 by the dropdown brackets 20a and 20b at a position outboard of the fixing point of the deployment arms 12a and 12b. At the opposing ends of the inner control arms 14 are rotationally fixed the sub-rails 11a and 11b and the outer control arms 19a and 19b. The outer control arms 19 are similar lengths to the secondary arms 13a and 13b and are fixed at their opposing ends to the rail 15 at a position outboard of the fixing point of the secondary arms 13. A stay 25a is rotationally fixed to the drop bracket 20a and to the inner control arm 14a. A cover 31 is fixed to the rail 15. The outline of bumper 30 is shown with a dotted line and is fixed to the vehicle 10.

Locking components 26a and 26b are provided that can be engaged and disengaged as appropriate by a user. The locking components 26 are provided to lock the rack 50 in position, once the rack 50 has been moved into its deployed position, as shown in Figure 1. The locking components 26, when engaged, prevent the movement of the deployment arms 12 relative to the vehicle 10, ensuring that the rack 50 is stably and securely held in position, once the rack 50 has been placed in its working position. The locking components 26 are mounted by dropdown brackets 20. Pins in the locking components 26 engage with holes on the deployment arms 12 to secure the rack in deployed and stored positions.

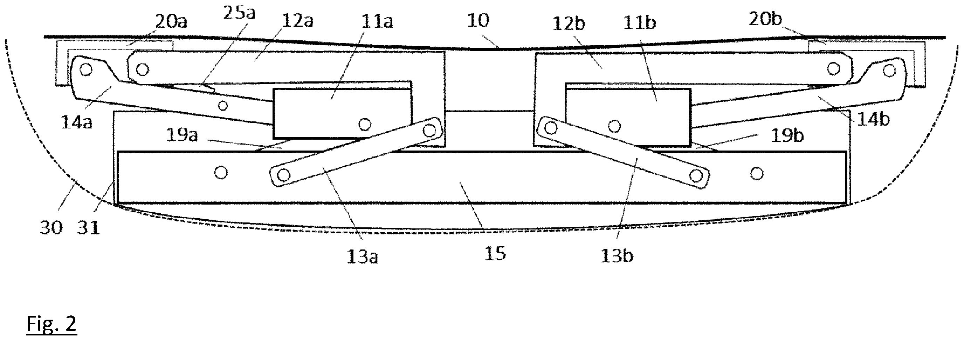

Figure 2 shows the rack 50 from a plan view in a stowed condition. The rack 50 can be moved between the two positions shown in Figures 1 and 2 and depending upon the installation of the rack 50, this can either be done manually by a user pulling and pushing the rail 15 or by a mechanical system (not shown) that can be operated, for example by the user pressing a button on the vehicle dashboard. The deployment arms 12a and 12b and the secondary arms 13a and 13b are substantially parallel to the rear panel of the vehicle 10. The control arms 14 and 19 are similarly parallel to the rear of the vehicle. The sub-rails 11a and 11b move towards the centre of the vehicle remaining parallel to the vehicle rear. The sub-rails 11a and 11b and the rail 15 move under or into the bumper 30 with the cover 31 following the bumper to hide the mechanisms. When the rack 50 is stowed away, as per the configuration of Figure 2, none of the parts of the rack 50 are visible from the rear of the vehicle as they are all folded away into the interior of the vehicle.

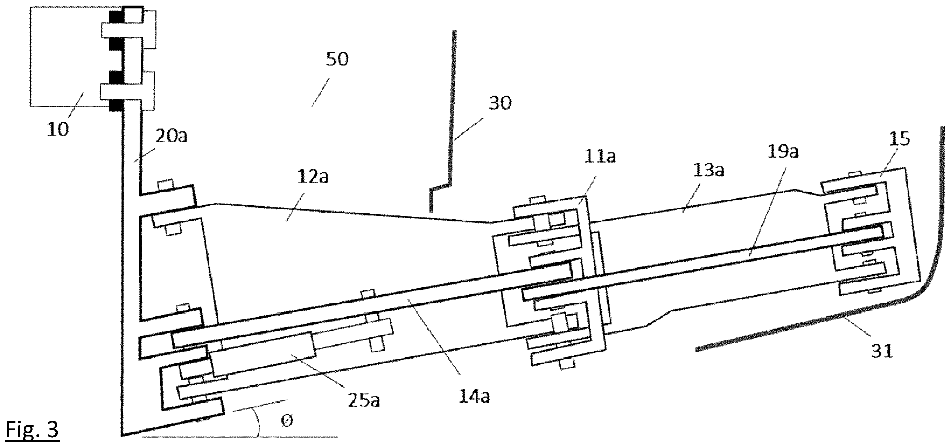

Figure 3 shows the deployed rack 50 of Figure 1 from the side. As can be seen in the Figure, the deployment arm 12a is rotationally fixed to the vehicle 10 through dropdown bracket 20a. The inner control arm 14a is also fixed to the vehicle 10 through the dropdown bracket 20a. The secondary arm 13a and the sub-rail 11a are rotationally fixed to the opposite end of the deployment arm 12a. The inner control arm 14a also fixes to the sub-rail 11a at its opposite end from the connection to the vehicle via the bracket 20a. The rail 15 is rotationally fixed to the opposite ends of the secondary arm 13a and the outer control arm 19a.

The stay 25a is shown rotationally fixed between the dropdown bracket 20a and the inner control arm 14a. The angle of the pivot on the dropdown bracket 20a is just off vertical from 5 to 15 degrees, such that the sub-rail 11 and rail 15 move upwards from the ground at the same time as outwards from the vehicle maintaining a good departure angle for kerbs and off-road driving. When the rack 50 is deployed, the cover 31 moves backwards from the vehicle 10 (to the right in Figure 3) and the deployment arms 12, the secondary arms 13 and the control arms 14 and 19 unfold, pushing the rail 15 away from the vehicle 10.

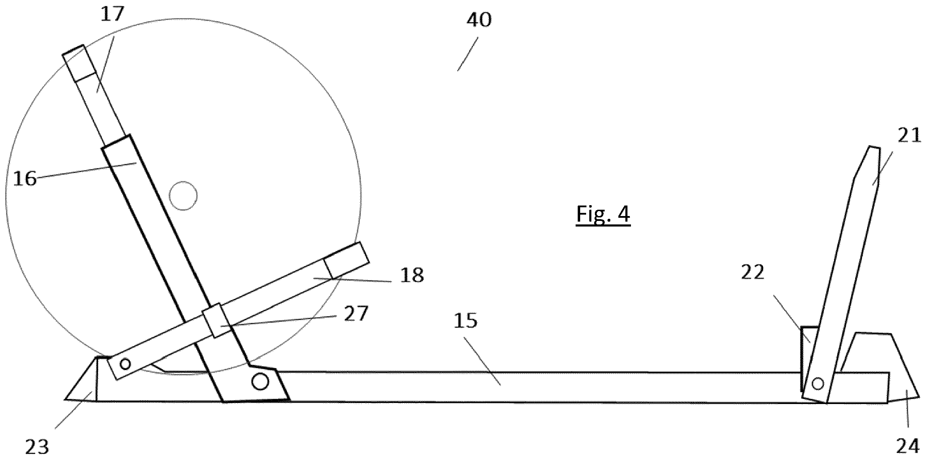

Figure 4 shows a rear view of one embodiment of the rack 50, where the rail 15 of Figures 1 to 3 is designed to carry a bicycle. The bike rack 40 (which is carried by the rail 15) is shown in Figure 4 in a deployed state. The components that form the bike rack 40 can be folded flat and will remain on the rail 15 at all times, so that when rack 50 is stowed away back into the vehicle, the bike rack 40 is stowed away at the same time. The deployment arms 12 and the secondary arms 13 are strong enough to carry the rail 15 and the weight of a bicycle, when the bike rack 50 is deployed.

A pivot arm 16 is rotationally connected to the rail 15. The rotation of the arm 16 is restricted to an arc from parallel to the rail upwards and outwards by 100 to 140 degrees to such that the arm 16 passes just beyond the axis of a bicycle front wheel (shown schematically in the Figure). A handle 17 telescopes along the length of the pivot arm 16 and resists movement to extend at multiple points. These two components are designed to grip the front wheel of a bicycle and retain that wheel in place in order to securely locate a bicycle on the bike rack 40.

A front wheel support 18 is rotationally connected to the rail 15 at a position outboard and above the rotation centre of the pivot arm 16. The rotation of the front wheel support 18 is restricted by a fixed stop 27 on the pivot arm 16. In this way the rotation of the pivot arm 16 automatically rotates the front wheel support 18 and fixes the pivot arm 16 in a position ready to accept a wheel. A rear wheel fastener in the form of a strap 21 and a buckle 22 is also provided. The strap 21 is located at the other end of the rail 15 to the pivot arm 16. The buckle 22 is fixed on the other side of the rail 15 at a similar position to provide a mechanism to secure a rear wheel of a bicycle. Rail wheel supports 23 and 24 are provided at opposite ends of the rail 15 to locate and support the wheels of a stored bicycle.

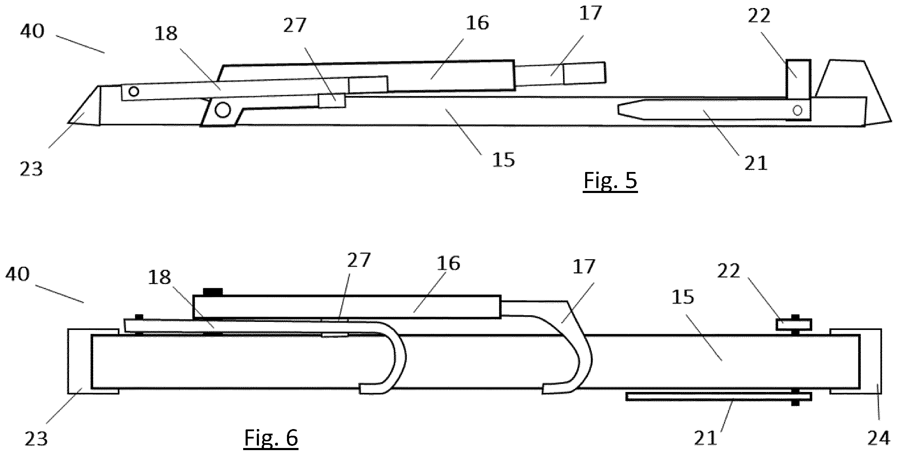

The bike rack 40 is shown from the end in Figure 5, in its stored condition, with the various components of the bike rack 40 folded down. The pivot arm 16 is in its stored position with the pivot arm 16 substantially parallel to the rail 15. The front wheel support 18 is also substantially parallel to the rail 15, with the stop 27 fixed to the pivot arm 16 limiting rotation. Further, the wheel strap 21 is rotated to be parallel with the rail 15 to reduce the height of the bike rail assembly and aid storage. The folded components take up very little space and they allow for the easy stowing of the rack 50 with the components of the bike rack 40 in place.

Figure 6 shows a plan view of the bike rack 40, with the front wheel support 18 sitting closer to the rail 15 than the pivot arm 16. The handle 17 and the front wheel support 18 have semi-circular hooks at one end to secure the wheels of a bicycle, where the centres of the wheel align substantially with the centre of the rail 15.

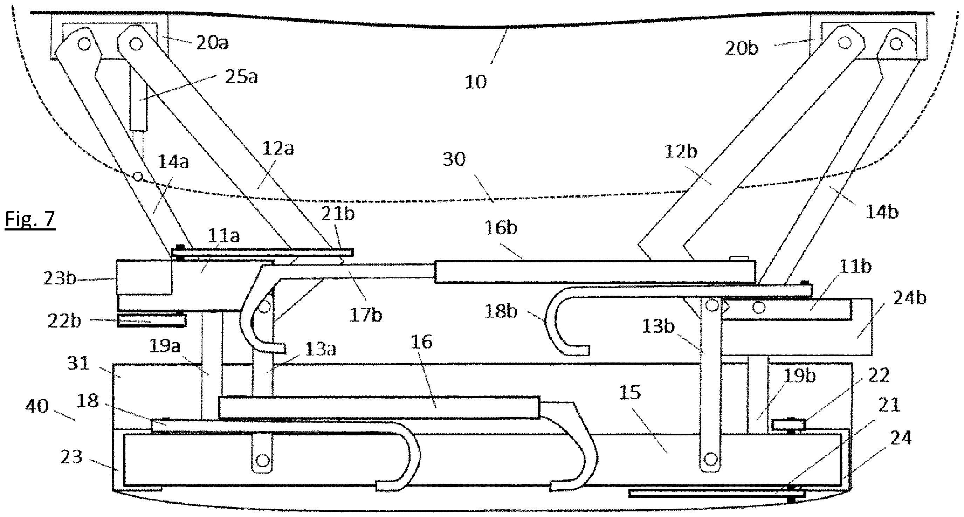

Figure 7 shows a version of the bike rack 40 that is designed to carry two bicycles, aligned so that the two bicycles, when stored, face in opposite directions. When compared to the rack 50 of Figures 1 to 6, Figure 7 shows a the rack 50 in deployed condition with a bike rack 40 in a stored condition and further comprises a second pivot arm 16b which is rotationally fixed to the sub-rail 11b, and a second front wheel support 18b is rotationally fixed to the sub-rail 11b at a position further outboard to the fixing point of the pivot arm 16b. A second rear wheel strap 21b and a buckle 22b are connected to the sub-rail 11a for securing a rear wheel of a second bicycle.

A second pair of rail wheel supports 23b and 24b each connected to a respective sub-rail 11 are provided. The rail wheel support 24b that is fixed to the sub-rail 11b is larger than the rail wheel support 24 and is not aligned with the rail wheel support 23b but is offset in the direction perpendicular to the rail 15. The alignment of the centre of the hooks of the front wheel support 18b and handle 17b are offset from the centre line of the stub rail 11a.

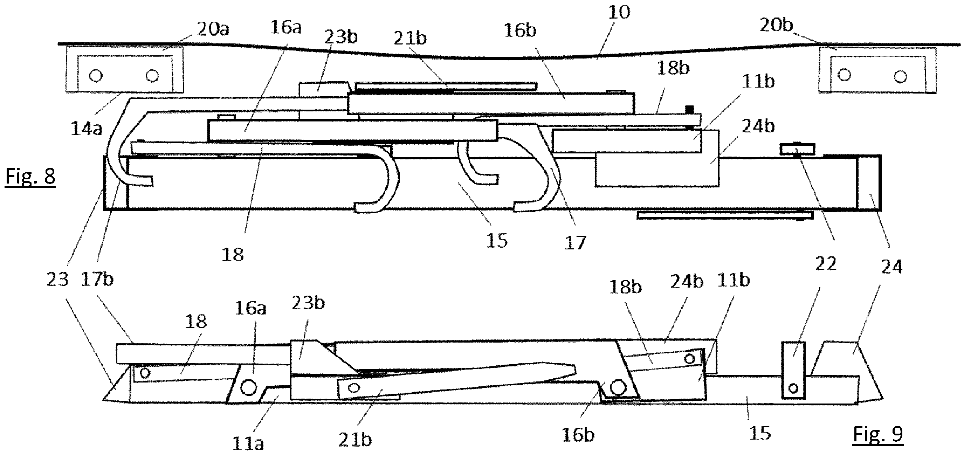

The rack 50 shown in Figure 8 shows a plan view of the two bike rack arrangement in a stored condition with the deployment, secondary and control arms removed for clarity. The pivot arms 16a and 16b are adjacent for storage. A handle 17b is adjacent to dropdown bracket 20a, and the end is aligned to the end of the rail 15. The front wheel support arm 18b is stored under the pivot arm 16a and terminates before the stub rail 11a. The wheel support 24b passes over the rail 15. The wheel support 23b passes over the deployment arm 12a when stored. In this arrangement, one of the second rail wheel supports 24b passes over the rail 15 and the other of the rail wheel supports 23b passes over the deployment arm 12a when the deployment arms 12 and the secondary arms 13 are folded to withdraw the rail 15 towards the vehicle 10.

Figure 9 shows the twin bike rack 50 of figure 8 from a front view with the deployment, secondary and control arms removed for clarity. This view shows the bike rack 50 looking backwards from the vehicle 10. The strap 21b and buckle 22b are rotated to lie substantially parallel with the rail 15. The pivot arms 16a and 16b are stored substantially parallel to the rail 15, as are the front wheel supports 18 and 18b. The wheel support 23 is reduced in height to allow the handle 17b to store above it. Similarly, the front wheel support 18 has a lower pivot point than 18b to allow handle 17b to store above it.

## Claims

1. A rack (50) for integrating into a vehicle (10), the rack (50) comprising:
• a pair of deployment arms (12) for connecting to the vehicle (10) at one end of each deployment arm (12),
• a pair of secondary arms (13), each secondary arm (13) connected to a respective deployment arm (12) at one end of each secondary arm (13),
• a rail (15) connected to each of the secondary arms (13) at an opposite end of the secondary arm (13) to the connection to the deployment arm (12),
• a pair of sub-rails (11), each sub-rail (11) connected at the juncture of a respective deployment arm (12) and a respective secondary arm (13), wherein the rack (50) further
comprises:
• a pair of outer control arms (19), each outer control arm (19) connected to the rail (15) at one end of each outer control arm (19) and connected to a respective sub-rail (11) at the opposite end of each outer control arm (19).

2. A rack according to claim 1, and further comprising a pair of inner control arms (14), each inner control arm (14) connected to the vehicle (10) at one end of each inner control arm (14) and connected to a respective sub-rail (11) at the opposite end of each inner control arm (14).

3. A rack according to claim 1 or 2, wherein each deployment arm (12) is L-shaped.

4. A rack according to claim 1, 2 or 3, wherein the rail (15) mounts a bike rack (40).

5. A rack according to claim 4, wherein the bike rack (40) comprises a set of components (16, 18, 21, 22) that can be folded to be substantially parallel to the rail (15).

6. A rack according to claim 4 or 5, wherein the bike rack (40) comprises a pivot arm (16) and a front wheel support (18) both rotationally connected to the rail (15).

7. A rack according to claim 6, wherein the pivot arm (16) is connected to the front wheel support (18) via a stop (27) which is directly connected to the pivot arm (16) and slidably connected to the front wheel support (18).

8. A rack according to claim 6 or 7, wherein the front wheel support (18) is fixed to the rail (15) outboard of the fixation point of the pivot arm (16) to the rail (15).

9. A rack according to claim 6, 7 or 8, and further comprising a pair of rail wheel supports (23, 24) located at opposite ends of the rail (15).

10. A rack according to any one of claim 6 to 9, as appended to claim 2, and further comprising a second pivot arm (16b) and a second front wheel support (18b) connected to a sub-rail (11).

11. A rack according to claim 10, and further comprising a second pair of rail wheel supports (23b, 24b) each connected to a respective sub-rail (11).

12. A rack according to claim 11, wherein the second rail wheel support (23b) is offset from the first wheel support (23) in the direction perpendicular to the rail 15.

13. A rack according to claim 11 or 12, wherein one of the second rail wheel supports (24b) passes over the rail (15) and the other of the rail wheel supports (23b) passes over the deployment arm (12a) when the deployment arms (12) and the secondary arms (13) are folded to withdraw the rail (15) towards the vehicle (10).

## Patentansprüche

1. Gestell (50) zum Einbau in ein Fahrzeug (10), wobei das Gestell (50) umfasst:
• ein Paar Ausfahrarme (12) zum Verbinden mit dem Fahrzeug (10) an einem Ende jedes Ausfahrarms (12),
• ein Paar sekundärer Arme (13), wobei jeder sekundäre Arm (13) mit einem jeweiligen Ausfahrarm (12) an einem Ende jedes sekundären Arms (13) verbunden ist,
• eine Schiene (15), die mit jedem der sekundären Arme (13) an einem gegenüberliegenden Ende des sekundären Arms (13) mit der Verbindung zu dem Ausfahrarm (12) verbunden ist,
• ein Paar Unterschienen (11), wobei jede Unterschiene (11) an der Verbindungsstelle eines jeweiligen Ausfahrarms (12) und eines jeweiligen sekundären Arms (13) verbunden ist,
wobei das Gestell (50) ferner umfasst:
• ein Paar äußerer Steuerarme (19), wobei jeder äußere Steuerarm (19) an einem Ende jedes äußeren Steuerarms (19) mit der Schiene (15) verbunden ist und an dem gegenüberliegenden Ende jedes äußeren Steuerarms (19) mit einer jeweiligen Unterschiene (11) verbunden ist.

2. Gestell nach Anspruch 1, und ferner umfassend ein Paar innerer Steuerarme (14), wobei jeder innere Steuerarm (14) an einem Ende jedes inneren Steuerarms (14) mit dem Fahrzeug (10) verbunden ist und an dem gegenüberliegenden Ende jedes inneren Steuerarms (14) mit einer jeweiligen Unterschiene (11) verbunden ist.

3. Gestell nach Anspruch 1 oder 2, wobei jeder Ausfahrarm (12) L-förmig ist.

4. Gestell nach Anspruch 1, 2 oder 3, wobei die Schiene (15) einen Fahrradträger (40) montiert.

5. Gestell nach Anspruch 4, wobei der Fahrradträger (40) einen Satz von Komponenten (16, 18, 21, 22) umfasst, die so eingeklappt werden können, dass sie im Wesentlichen parallel zu der Schiene (15) sind.

6. Gestell nach Anspruch 4 oder 5, wobei der Fahrradträger (40) einen Schwenkarm (16) und einen Vorderradträger (18) umfasst, die beide drehbar mit der Schiene (15) verbunden sind.

7. Gestell nach Anspruch 6, wobei der Schwenkarm (16) mit dem Vorderradträger (18) über einen Anschlag (27) verbunden ist, der direkt mit dem Schwenkarm (16) verbunden ist und verschiebbar mit dem Vorderradträger (18) verbunden ist.

8. Gestell nach Anspruch 6 oder 7, wobei der Vorderradträger (18) an der Schiene (15) außerhalb des Befestigungspunkts des Schwenkarms (16) an der Schiene (15) befestigt ist.

9. Gestell nach Anspruch 6, 7 oder 8, und ferner umfassend ein Paar Schienenradträger (23, 24), die sich an gegenüberliegenden Enden der Schiene (15) befinden.

10. Gestell nach einem der Ansprüche 6 bis 9, rückbezogen auf Anspruch 2, und ferner umfassend einen zweiten Schwenkarm (16b) und einen zweiten Vorderradträger (18b), der mit einer Unterschiene (11) verbunden ist.

11. Gestell nach Anspruch 10, und ferner umfassend ein zweites Paar Schienenradträger (23b, 24b), die jeweils mit einer jeweiligen Unterschiene (11) verbunden sind.

12. Gestell nach Anspruch 11, wobei der zweite Schienenradträger (23b) von dem ersten Radträger (23) in der Richtung senkrecht zu der Schiene 15 versetzt ist.

13. Gestell nach Anspruch 11 oder 12, wobei einer der zweiten Schienenradträger (24b) über die Schiene (15) und der andere der Schienenradträger (23b) über den Ausfahrarm (12a) verläuft, wenn die Ausfahrarme (12) und die sekundären Arme (13) eingeklappt sind, um die Schiene (15) in Richtung des Fahrzeugs (10) zurückzuziehen.

## Revendications

1. Rack (50) à intégrer dans un véhicule (10), le rack (50) comprenant :
• une paire de bras de déploiement (12) pour se raccorder au véhicule (10) à une extrémité de chaque bras de déploiement (12),
• une paire de bras secondaires (13), chaque bras secondaire (13) étant raccordé à un bras de déploiement respectif (12) à une extrémité de chaque bras secondaire (13),
• un rail (15) raccordé à chacun des bras secondaires (13) à une extrémité opposée du bras secondaire (13) au raccordement au bras de déploiement (12),
• une paire de sous-rails (11), chaque sous-rail (11) étant raccordé à la jonction d'un bras de déploiement (12) et d'un bras secondaire (13) respectif,
dans lequel le rack (50) comprend en outre :
• une paire de bras de commande externes (19), chaque bras de commande externe (19) étant raccordé au rail (15) à une extrémité de chaque bras de commande externe (19) et raccordé à un sous-rail respectif (11) à l'extrémité opposée de chaque bras de commande externe (19).

2. Rack selon la revendication 1 et comprenant en outre une paire de bras de commande intérieurs (14), chaque bras de commande intérieur (14) étant raccordé au véhicule (10) à une extrémité de chaque bras de commande intérieur (14) et raccordé à un sous-rail respectif (11) à l'extrémité opposée de chaque bras de commande intérieur (14).

3. Rack selon la revendication 1 ou 2, dans lequel chaque bras de déploiement (12) est en forme de L.

4. Rack selon la revendication 1, 2 ou 3, dans lequel le rail (15) se monte sur un porte-vélos (40).

5. Rack selon la revendication 4, dans lequel le porte-vélos (40) comprend un ensemble de composants (16, 18, 21, 22) pliables pour être sensiblement parallèles au rail (15).

6. Rack selon la revendication 4 ou 5, dans lequel le porte-vélos (40) comprend un bras pivotant (16) et un support de roue avant (18) tous deux raccordés en rotation au rail (15).

7. Rack selon la revendication 6, dans lequel le bras pivotant (16) est raccordé au support de roue avant (18) par l'intermédiaire d'une butée (27) qui est directement raccordée au bras pivotant (16) et raccordée de manière coulissante au support de roue avant (18).

8. Rack selon la revendication 6 ou 7, dans lequel le support de roue avant (18) est fixé au rail (15) à l'extérieur du point de fixation du bras pivotant (16) au rail (15).

9. Rack selon la revendication 6, 7 ou 8, et comprenant en outre une paire de supports de roues sur rail (23, 24) situés aux extrémités opposées du rail (15).

10. Rack selon une quelconque des revendications 6 à 9, telle qu'annexée à la revendication 2, et comprenant en outre un deuxième bras pivotant (16b) et un deuxième support de roue avant (18b) raccordé à un sous-rail (11).

11. Rack selon la revendication 10, et comprenant en outre une deuxième paire de supports de roues sur rail (23b, 24b) raccordés chacun à un sous-rail respectif (11).

12. Rack selon la revendication 11, dans lequel le deuxième support de roue sur rail (23b) est décalé du premier support de roue (23) dans la direction perpendiculaire au rail.

13. Rack selon la revendication 11 ou 12, dans lequel un des deuxièmes supports de roues sur rail (24b) passe sur le rail (15) et l'autre des supports de roues sur rail (23b) passe sur le bras de déploiement (12a) lorsque les bras de déploiement (12) et les bras secondaires (13) sont repliés pour retirer le rail (15) vers le véhicule (10).
